Europäisches Patentamt

European Patent Office

Office européen des brevets

(19)

(11) EP 0 746 747 B1

(12) **FASCICULE DE BREVET EUROPEEN**

(45) Date de publication et mention
de la délivrance du brevet:
**15.07.1998 Bulletin 1998/29**

(21) Numéro de dépôt: **95909850.0**

(22) Date de dépôt: **21.02.1995**

(51) Int Cl.⁶: **G01K 17/20**

(86) Numéro de dépôt international:
**PCT/FR95/00202**

(87) Numéro de publication internationale:
**WO 95/22746 (24.08.1995 Gazette 1995/36)**

(54) **PROCEDE ET DISPOSITIF DE MESURE EN REGIME TRANSITOIRE DE TEMPERATURES ET DE FLUX SURFACIQUES**

**VERFAHREN UND VORRICHTUNG ZUM MESSEN, WÄHREND ÜBERGANGSZUSTÄNDE, DER TEMPERATUR UND DES WÄRMEFLUSSES DURCH OBERFLÄCHEN**

**METHOD AND DEVICE FOR TRANSIENTLY MEASURING SURFACE TEMPERATURES AND STREAMS**

(84) Etats contractants désignés:
**DE FR GB**

(30) Priorité: **22.02.1994 FR 9401996**

(43) Date de publication de la demande:
**11.12.1996 Bulletin 1996/50**

(73) Titulaire: **UNIVERSITE DE NANTES
F-44035 Nantes Cédex 01 (FR)**

(72) Inventeurs:
• **BARDON, Jean-Pierre
F-44000 Nantes (FR)**
• **JARNY, Yvon
F-44700 Orvault (FR)**

(74) Mandataire: **Dawidowicz, Armand
Cabinet Dawidowicz,
18, Boulevard Péreire
75017 Paris (FR)**

(56) Documents cités:
**DE-A- 3 822 164        US-A- 5 048 973**

• **NUMERICAL HEAT TRANSFER, vol. 9, USA,
page 27 M. RAYNAUD E.A. 'A NEW
FINITE-DIFFERENCE METHOD FOR THE
NONLINEAR INVERSE HEAT CONDUCTION
PROBLEM'**

## Description

La présente invention concerne la mesure en régime transitoire de flux et de températures à l'interface de deux milieux solide/solide ou solide/liquide ou solide/gaz.

La mesure directe à l'interface est souvent délicate, voire impossible, de même que celle dans le milieu interne. On procède donc le plus souvent à une évaluation qui est d'autant moins pertinente que le capteur, généralement constitué de couples thermoélectriques, est implanté dans la paroi à une distance relativement grande de l'interface. Si des évolutions rapides du phénomène physique à analyser ou à contrôler se produisent, une telle disposition du capteur amène à ne disposer que d'une information dégradée, les composantes haute fréquence de la mesure étant filtrées et celle-ci étant de plus retardée par rapport au phénomène. Dans d'autres cas, la protection qu'il faut réaliser pour amener le capteur à proximité du phénomène le perturbe localement. Une erreur systématique importante peut être introduite. S'agissant de mesures de flux souvent réalisée à l'aide d'au moins deux thermocouples implantés le long d'une même courbe normale à des isothermes, les problèmes sont multipliés.

Le but de la présente invention est donc de proposer un procédé et un dispositif de mesure incorporant des capteurs qui ne modifient ni la géométrie de l'interface, ni son contact avec le milieu et permettent l'identification de variations rapides de flux thermiques.

A cet effet, l'invention a pour premier objet un procédé de mesure en régime transitoire de flux et de températures à l'interface de deux milieux solide/solide ou solide/liquide ou solide/gaz au moyen d'au moins un thermocouple, caractérisé en ce qu'on ménage dans la paroi solide traversée par le flux thermique une coupe débouchant à l'interface de ladite paroi avec l'autre milieu, ladite coupe étant parallèle audit flux au point de contact correspondant de l'interface, on dispose au moins un microthermocouple dans un plan de ladite coupe au voisinage immédiat de ladite interface et, dans le cas d'une mesure de flux, au moins un autre microthermocouple dans ledit plan à une distance prédéterminée du microthermocouple d'interface et on recouvre étroitement ladite coupe par le matériau de ladite paroi solide ou un matériau ayant des caractéristiques thermiques similaires à celles du matériau pariétal.

Grâce à l'utilisation de microthermocouples posés sur une face coupée de la paroi solide à mesurer, il est possible d'implanter le thermocouple pratiquement à l'interface, aux dimensions du thermocouple près. La formation de la coupe peut être réalisée en coupant la pièce en deux puis en réunissant à nouveau les deux parties par tout procédé convenable. Il peut aussi s'agir de la formation d'un puits à parois réglées dans lequel est ensuite ajusté étroitement un capteur de forme complémentaire, portant le ou les thermocouples, et réalisée en un matériau identique à celui de la paroi ou ayant des caractéristiques thermiques similaires.

Dans ce dernier cas, l'invention a également pour objet un dispositif de mesure en régime transitoire de flux et de températures à l'interface de deux milieux solide/solide ou solide/liquide au moyen d'au moins un capteur disposé dans l'une des parois solides, caractérisé en ce que ledit capteur, dont le corps est en un matériau de caractéristiques thermiques similaires au matériau pariétal, est disposé de manière ajustée à l'intérieur d'un évidement débouchant sur l'interface où les mesures sont à réaliser, les parois dudit évidement étant parallèles au flux au point de contact correspondant de l'interface, ce capteur présentant au moins un plan de coupe parallèle au flux à mesurer et incorporant dans ledit plan de coupe au moins deux microthermocouples isolés électriquement du matériau du corps du capteur, ces microthermocouples présentant une portion disposée perpendiculaire audit flux et au moins une deuxième portion en prolongement de la première portion reliée à une unité de traitement des mesures.

On a proposé (voir US-A-5.048.973 et 5.086.204) de ménager dans la matériau pariétal une saignée annulaire borgne dans laquelle sont montés des thermocouples. Un tel dispositif connu ne permet pas, comme la présente invention, une implantation de thermocouples au voisinage immédiat de l'interface.

On connaît aussi, par exemple par DE-A-3.822.164 une technique d'implantation de thermocouples dite en couches minces sur l'interface ou au voisinage immédiat de l'interface, ou bien sur une pièce rapportée en un matériau ayant des propriétés thermiques très proches. Cette technique ne permet la mesure que des flux surfaciques à l'interface et perturbe en outre le fonctionnement du dispositif à mesurer du fait de la multiplication de couches isolantes nécessaires.

L'invention sera bien comprise à la lecture de la description suivante d'exemples de réalisation, en référence aux dessins annexés dans lesquels :

la figure 1 représente une vue en perspective de profil d'une portion de paroi avec un capteur implanté à l'intérieur de ladite paroi ;

les figures 2A à 2C représentent une vue en coupe du capteur implanté à l'intérieur de ladite paroi ;

la figure 3 représente une vue en position éclatée du plan de coupe d'un capteur équipé de thermocouples ;

la figure 4 représente une vue en coupe partielle d'une autre forme de réalisation du capteur ; et

la figure 5 représente une autre forme de réalisation du capteur.

Conformément à l'invention décrite dans le cas de l'utilisation d'un capteur rapporté, le dispositif de mesure de température et de flux surfacique comprend au moins un capteur de caractéristiques thermiques similaires à celles du matériau pariétal implanté à l'intérieur d'un évidement ménagé dans ladite paroi et des microthermocouples 8 réalisés à partir de circuit de fils conducteurs assurant la transmission vers l'extérieur des différents signaux à traiter, une unité de traitement de mesure des données intégrée ou non au corps du capteur et délivrant des valeurs de température et/ou de flux surfaciques.

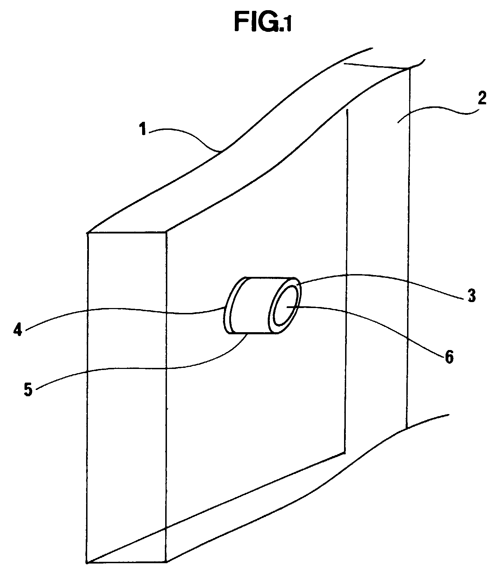

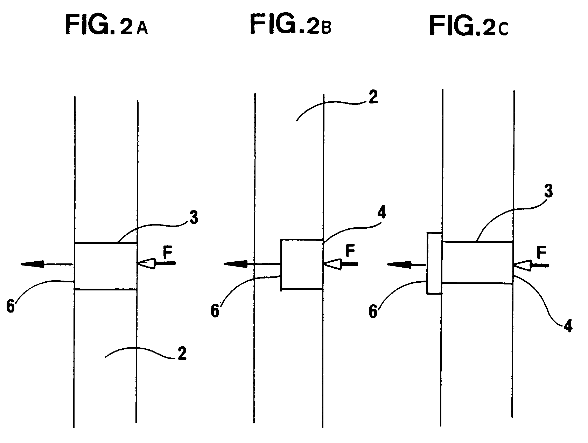

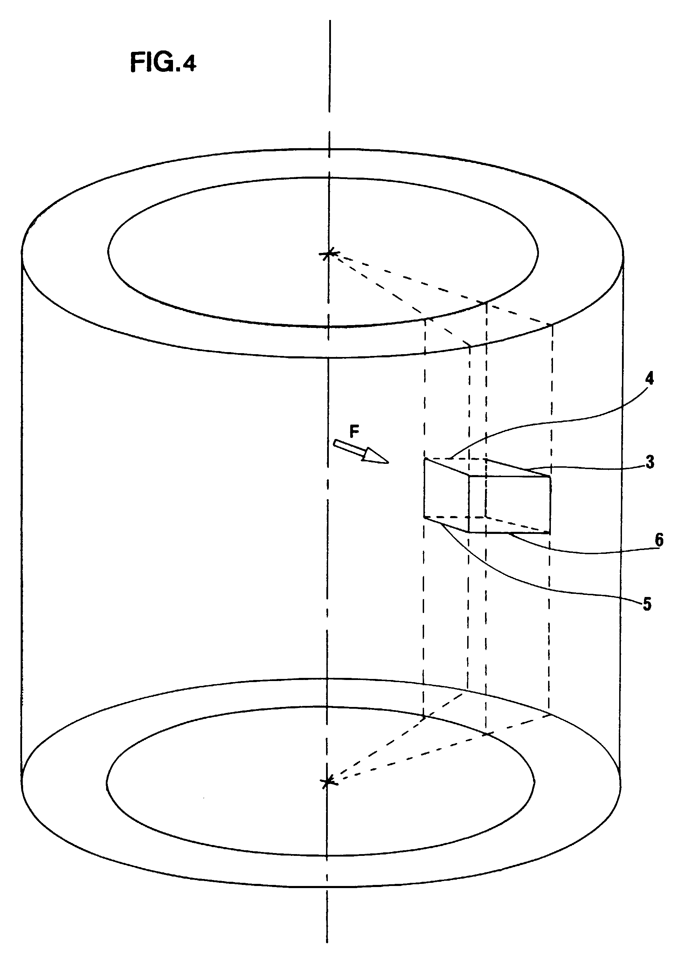

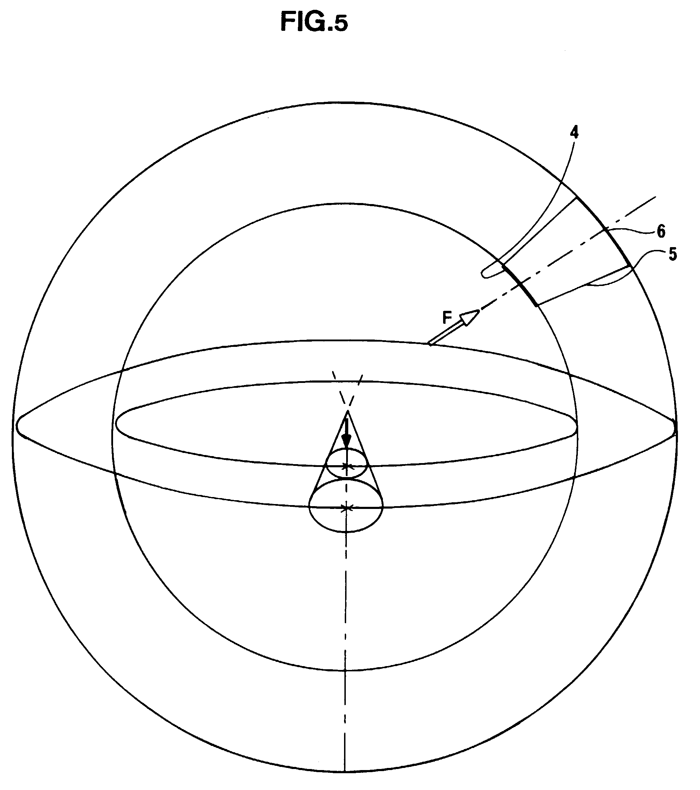

Ce dispositif de mesure permet la mesure de flux de température à l'interface de milieux solide/solide ou de milieux solide/liquide ou solide/gaz. Le ou les capteurs seront toujours implantés dans la paroi solide. Dans le cas de la figure 1, l'interface représentée en 1 constitue l'interface d'un milieu solide/solide, le milieu solide étant constitué par la paroi 2. Le capteur 3 est incorporé dans un évidement ménagé dans cette paroi. Ce capteur 3, indépendamment de sa forme, comportera toujours une face avant 4 débouchant à l'interface 1, une ou des parois latérales 5 et une face arrière 6. La face avant, la ou les parois latérales et la face arrière délimitent le volume du corps du capteur. Ce volume du corps du capteur correspond sensiblement au volume de l'évidement. La face avant est une portion de l'interface de dimension suffisamment limitée pour qu'elle soit considérée comme un élément de surface isotherme. Cette face avant présentera, dans la plupart des cas, pour des raisons pratiques, un centre de symétrie. Ce centre se définira également comme l'intersection de l'axe du corps du capteur et de sa face avant. Ce capteur comporte en outre une ou plusieurs parois latérales 5. Cette paroi latérale se définit comme une surface réglée dont la génératrice normale à la surface isotherme décrit le contour de la face avant. Dans le cas le plus simple, représenté à la figure 1, où le transfert de chaleur peut être décrit convenablement dans la zone du capteur comme unidirectionnel, cette paroi latérale est un cylindre défini par une droite perpendiculaire aux surfaces isothermes décrivant le contour limitant la face avant du capteur. Dans le cas représenté à la figure 4, où le phénomène de transfert de chaleur présente une symétrie dite cylindrique, la paroi latérale 5 sera constituée de quatre plans dont deux passent par l'axe de symétrie du cylindre et les deux autres sont perpendiculaires à cet axe. En d'autre termes, le capteur sera constitué par un secteur cylindrique. Dans le cas où, tel que représenté à la figure 5, le phénomène de transfert de chaleur a une symétrie sphérique, la paroi latérale sera délimitée par un tronc de cône ou un cône dont le sommet est le centre de la sphère. Quant à la face arrière 6, elle se définie comme une portion d'isotherme limitée par un contour qui est la trace de la paroi latérale 5 sur cette surface. Cette face arrière peut avoir pour forme une configuration variable telle que représentée aux figures 2A à 2C. Dans la figure 2A, cette face arrière du corps du capteur constitue une portion de la face arrière de la paroi 2. Dans le cas de la figure 2B, cette face arrière 6 du corps de capteur est intégrée à l'intérieur de la paroi 2. On fera dans ce cas en sorte que le contact entre la face arrière du corps du capteur et le reste de la paroi soit tel que la résistance thermique de contact le long de cette surface soit la plus réduite possible. Enfin, dans le cas de la figure 2C, cette face arrière 6 du corps du capteur fait saillie au-delà de la face arrière de la paroi 2.

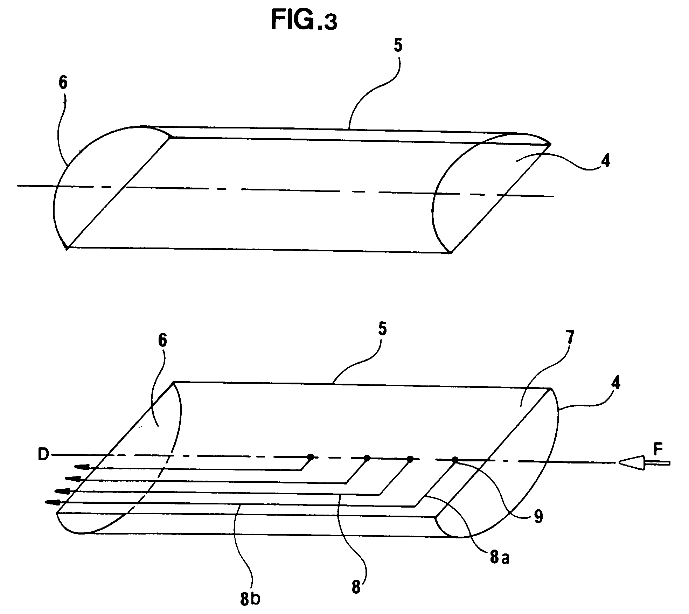

Ce capteur, dont la géométrie vient d'être décrite, présente au moins un plan de coupe 7 comme le montre la figure 3. Des microthermocouples 8 sont disposés dans ce ou ces plans de coupe 7. Ces couples thermoélectriques 8 sont en général de type intrinsèque si le matériau de la paroi du capteur est conducteur ou plus rarement de type classique à deux fils quand le matériau constitutif de la paroi n'est pas conducteur. La section des conducteurs et des constituants est très faible de l'ordre de 100 à 300 microns$^2$. Les jonctions 9 de chacun des couples thermoélectriques implantés sont réalisées en des points situés sur un axe parallèle au flux F. Cet axe correspondra généralement à l'axe dit de symétrie du corps du capteur défini ci-dessus. Il est important qu'au voisinage immédiat de la jonction, le fil conducteur, constituant un couple thermoélectrique, chemine perpendiculairement au flux thermique sur une longueur au moins égale à par exemple vingt fois son diamètre moyen. Cette portion correspond à la portion 8a représentée à la figure 3. La suite du cheminement du conducteur est réalisée de telle sorte que le conducteur débouche en face arrière 6 du corps du capteur pour être raccordé au module de traitement des signaux de mesure. Cette seconde portion correspond à la portion 8b représentée à la figure 8. Les conducteurs constituant les couples thermoélectriques intrinsèques ou non doivent être isolés les uns par rapport aux autres. C'est pourquoi, lors du procédé de fabrication desdits capteurs, on dépose des couches isolantes sur les faces planes de séparation ou plans de coupe 7 des éléments du corps du capteur par tout moyen adapté là où cela est nécessaire. En outre, le cheminement des fils des différents microthermocouples doit être tel que les fils ne doivent pas se croiser. Le nombre minimum de couples thermoélectriques 8 implantés dans le corps du capteur est de deux. Ces microthermocouples sont implantés à des abscisses comprises entre $x_{min}$ et $x_{max}$ mesurées le long de l'axe du capteur à partir d'une origine située au point d'intersection avec la face avant dudit capteur. Une fois l'implantation des microthermocouples réalisée, il convient de reconstituer le capteur et de l'installer dans l'évidement prévu à cet effet. Il est à noter que l'implantation des microthermocouples 8 peut s'effectuer par collage sous observation microscopique, par dépôt à travers un masque, par dépôt sous vide d'une couche mince et par lithogravure de cette dernière ou par transfert à partir d'un film adhésif de très faible épaisseur. L'immobilisation, en particulier, en translation du capteur à l'intérieur de l'évidement, peut s'effectuer au moyen de broches de conductivité thermique identique à celle de la paroi.

A titre d'exemple, le positionnement du ou des microthermocouples dans l'intervalle $x_{min}$, $x_{max}$ d'un capteur de température et de flux surfacique est décrit ci-après.

On considère le cas où le signal à reconstruire est la superposition d'un signal lent et d'un signal rapide. La réponse impulsionnelle avec une condition sur la température, plus contraignante qu'avec une condition sur le flux, est étudiée en fonction de la position $x_c$ de la jonction et de la diffusivité A du matériau. L'analyse de cette réponse associée à celle de l'incertitude $\varepsilon x$ sur la position et à celle de l'incertitude $\varepsilon_y$ sur la réponse conduit à un choix de $x_{min}$ et de $x_{max}$ correspondant à la composante rapide du signal. Ainsi, dans le cas où a correspond à la diffusivité, h à la réponse impulsionnelle en $x = x_c$, t au temps, y à la réponse en $x_c$, $\theta(x,t)$ à la température à l'abscisse x, à l'instant t, $\Delta x$ à l'incertitude sur la position des jonctions, $\Delta y$ à l'incertitude sur la réponse en considérant le phénomène de conduction thermique comme se déroulant dans un milieu semi-infini de diffusivité a, la température $\theta$ à l'abscisse x, à l'instant t est solution du système d'équations :

$$\frac{\partial \theta}{\partial t}(x, t) = a\, \frac{\partial^2 \theta}{\partial x^2}(x,t), \ x > O, \ t > O$$

$$\theta(x,t) = u(t), \ x = O, \ t > O$$

$$\theta(x,t) = O, \ x > O, \ t = O$$

où u(t) est une excitation quelconque variable en fonction du temps.

Soit T(x,t) la réponse à l'impulsion unitaire $\delta(t)$

$$\frac{\partial T}{\partial t}(x,t) = a\, \frac{\partial^2 T}{\partial x^2}(x,t), \ x > O, \ t > O$$

$$T(x,t) = \delta(t), \ x = O, \ t > O$$

$$T(x,t) = O, \ x > O, \ t = O$$

La solution $\theta(x,t)$ s'obtient par convolution de u(t) avec T(x,t)

$$\theta(x,t) = \int_{c}^{t} u(t-\tau)\ T(x,\tau)\ d\tau$$

La réponse impulsionnelle T(x,t) en $x = x_c$, est notée h(t), elle vaut :

$$h(t) = \frac{x_c}{\sqrt{4\pi\, a}}\, t^{-3/2} \exp(-\frac{x_c^2}{4at}), \ t > O$$

Une approximation de l'impulsion $\delta(t)$ s'obtient en considérant la fonction "créneau" unitaire c(t), de largeur $\Delta t$ et d'amplitude $1/\Delta t$.

En dérivant par rapport à t, on obtient

4

$$h'(t) = \frac{x_c}{\sqrt{4\pi a}} \; t^{-3/2} \exp\left(- \frac{x_c^2}{4at}\right) \left[- \frac{3}{2\,t} + \frac{x_c^2}{4\,at^2}\right]$$

d'où h(t) est maximum pour

$$t^* = \frac{x_c^2}{6\,a}$$

et

$$h_{max} = h(t^*) = \frac{x_c}{\sqrt{4\pi\,a}} \left[\frac{x_c^2}{6\,a}\right]^{-3/2} \exp(- 3/2)$$

soit

$$C = 6 \left[3/2\pi\right]^{1/2} \exp(-3/2) = 0.925$$

on a

$$h_{max} = C \; \frac{a}{x_c^2}$$

Réponse à une entrée quelconque :

La convolution de l'entrée u(t) et de la réponse h(t) est notée y(t), et permet d'obtenir numériquement la réponse à une entrée quelconque.

On note $t_k = k\,\Delta t$, $u_k = u(t_k)$ et $y_k = y(t_k)$

En prenant une approximation "rectangle" de l'intégrale de convolution, on obtient :

$$y_k \cong \frac{x_c}{\sqrt{4\pi a\Delta t}} \sum_{j=1}^{k} u_{k-j} \exp\left(- \frac{x_c^2}{4aj\Delta t}\right) j^{-3/2}$$

Exemple 1: $u(t_k) = 1/\Delta t$, O, O, ....; = fonction "créneau" unitaire

$$y_k \cong \frac{x_c}{\sqrt{4\pi a}} \exp\left(-\frac{x_c^2}{4at_k}\right)(t_k)^{-3/2} = h_k$$

Note : si $\Delta t \ll t^*$, $h(t)$ est une approximation de la réponse $y(t)$

Exemple 2 : $u(t_k) = \theta_o$, 0, 0 ....

= fonction "créneau" d'amplitude $\theta_o$, de durée $\Delta t$

$$y_k \cong \theta_o \, h_k \, \Delta t$$

Détermination de $x_{max}$

La détermination de $x_{max}$ peut être décidée en remarquant d'une part que l'amplitude $h_{max}$, donc la sensibilité du capteur, diminue lorsque la position $x_c$ s'éloigne de $x = 0$, et que d'autre part la période $t^*$, donc le temps de réponse du capteur, augmente quand $x_c$ augmente.

spécification du rapport "signal/bruit"

- Soit $y$ la réponse à la fonction "créneau" d'amplitude $\theta_o$ et de durée $\Delta t$, ($\Delta t \ll t^*$). On considère un niveau de bruit $\Delta y$ sur cette réponse et on note $\varepsilon y$ l'incertitude $\Delta y/\theta_o$, on a :

$$y_{max} \cong \theta_o \, h_{max} \, \Delta t$$

- on introduit un rapport "signal/bruit" minimum $R_{min}$, on choisira $x_c$ tel que

$$\frac{y_{max}}{\Delta y} > R_{min}$$

Pour adimensionner les variables, il est commode d'introduire une longueur de référence $x_r = \sqrt{a \, \Delta t}$ et la variable réduite

$\xi = x_c/x_r$, de sorte que $y_{max} = C \, \theta_o/\xi^2$

et la condition précédente devient

$$\frac{C \, \theta_o}{\Delta y \, R_{min}} = \frac{C}{\varepsilon_y \, R_{min}} > \xi^2$$

en posant

$$\xi_{max}^2 = \frac{C}{\varepsilon_y \, R_{min}},$$

on aura $\xi < \xi_{max}$ donc $x_c < x_{max}$

$R_{min} = 1$ correspond au seuil de détectabilité.

Exemple : $R_{min} = 1$, $a = 10^{-5} m^2/s$, $\varepsilon_y = 10^{-3}$, $\Delta t = 10^{-4} s$, $C \cong 1 \Rightarrow x_{max} = 10^{-3}$ m

Pour détecter un "pulse" de 100 μs, si la précision de mesure est $10^{-3}$, avec $a = 10^{-5}$, la position maximale est $x_{max} = 1$ mm.

Spécification du temps de réponse :

La période $t^*$ est une approximation du temps nécessaire pour que le "créneau" d'entrée soit "vu" par le capteur situé en $x_c$. En introduisant $\tau_{max}$, constante de temps maximum du capteur, on choisira $x_c$ tel que :

$$t^* < \tau_{max}, \quad \text{c.a.d.} \quad \frac{x_c^2}{6\,a} < \tau_{max}$$

d'où, en posant

$$x_{max}^2 = 6\,a\,\tau_{max}$$

on aura $x_c < x_{max}$

Exemple : $a = 10^{-5}$ m$^2$/s, $\tau_{max} = 10^{-2}$s => $x_{max} = 7.75$ mm

Note : la constante de temps $\tau_{max}$ doit être rapprochée de la fréquence d'échantillonnage N du signal.

Détermination de $x_{min}$ :

Ainsi que le montre le résultat précédent, le signal source doit être reconstruit à partir d'une observation réalisée à une abscisse la plus proche possible de la paroi. Cependant, lorsque la jonction du thermocouple se rapproche de la paroi, l'incertitude relative sur sa position augmente ainsi que l'erreur engendrée dans la reconstruction du signal. La prise en compte de l'incertitude sur la mesure de température et de celle sur l'emplacement de la jonction conduit donc à définir une position notée $x_{min}$ entre les abscisses $x = 0$ et $x_{max}$.

On considère à nouveau la réponse $y(t)$ à la fonction "créneau" d'amplitude $\theta_o$ et de durée $\Delta t$, $(\Delta t \ll t^*)$

On a $y(t) \cong \theta_o\,\Delta t.h(t)$, $t > o$

Pour déterminer $\theta_o$ à partir de $y$, on considère l'instant $t^*$ où la sensibilité est maximale :

$$y(t^*) \cong \theta_o\,\Delta t.h_{max} => y_{max} \cong \theta_o - \frac{Ca\,\Delta t}{x_c^2}$$

d'où

$$\frac{dy}{y_{max}} = \frac{d\theta_o}{\theta_o} - 2\frac{dx_c}{x_c}$$

$$\frac{d\theta_o}{\theta_o} = \frac{dy}{y_{max}} + 2\frac{dx_c}{x_c}$$

comme

$$\frac{dy}{y_{max}} = \frac{dy}{\theta_o}\frac{x_c^2}{Ca\Delta t}$$

on déduit

$$\frac{\Delta\theta_o}{\theta_o} \leq \frac{x_c^2}{Ca\Delta t}\frac{\Delta y}{\theta_o} + 2\frac{x_{max}}{x_c}\frac{\Delta x_c}{x_{max}} \; ,$$

$$\frac{\Delta\theta_o}{\theta_o} \leq \frac{x_c^2}{Ca\Delta t}\,\varepsilon_y + 2\frac{x_{max}}{x_c}\,\varepsilon_x = \phi(x_c;\,\varepsilon_y,\varepsilon_x)$$

On introduit $\varepsilon_o$ une incertitude relative désirée sur $\theta_o$. Pour avoir :

$$\frac{\Delta\theta_o}{\theta_o} \leq \varepsilon_o$$

Il suffit que $x_c \in ]0, x_{max}$ (vérifie :

$$\phi(x_c; \varepsilon_y, \varepsilon_x) < \varepsilon_o$$

On prendra pour $x_{min}$ la valeur inférieure de $x_c$ qui vérifie cette inégalité. Plus $\varepsilon_o$ sera élevé et plus $x_{min}$ sera faible. Il existe une valeur optimale $x_c^*$ qui minimise l'incertitude $\phi$.

On trouve

$$x_c^* = (\Delta x \, Ca \, \Delta t \, / \in t)^{1/3}$$

Exemple : $\Delta x = 10 \ \mu m$, $\Delta t = 100 \ \mu s$, $\varepsilon y = 10^{-3}$
   $a = 10^{-5} \ m^2/s$ et $xc^* = 215 \ \mu m$

Bien évidemment, il est possible également d'implanter le ou les couples thermoélectriques à l'extérieur de l'intervalle $x_{min}$, $x_{max}$. A partir d'un emplacement situé au-delà de $x_{max}$, une composante basse fréquence du signal pourra être reconstituée. En conséquence, il est possible de construire un capteur de flux et de température surfaciques comportant un nombre variable de couples thermoélectriques dont l'implantation sera fonction des caractéristiques dynamiques souhaitées pour la mesure. Le traitement des signaux et des informations pourra être variable. Généralement, les signaux issus de chacun des couples thermoélectriques seront simultanément échantillonnés et numérisés au moyen d'au moins un convertisseur analogique-numérique, à une fréquence définie en tenant compte de la valeur de la constante de temps t max définie ci-dessus. Les informations représentant les températures mesurées aux différentes jonctions à l'instant t seront traitées par un microprocesseur directement intégré au capteur s'il est souhaité que l'estimation des flux et/ou températures surfaciques soit simultanée aux mesures ou après enregistrement intermédiaire par un micro-ordinateur ou une station de travail s'il est accepté que l'estimation des flux et/ou températures surfaciques soit différée par rapport aux mesures.

A titre d'exemple, il est fourni ci-après un algorithme de traitement séquentiel de relevés de température. Ce traitement des données a pour but d'obtenir une approximation de la température et/ou du flux surfacique en fonction du temps à partir des relevés périodiques internes de température délivrés par le microcapteur.

Ce traitement est basé sur le principe de la méthode de J.V. BECK qui utilise une approximation par différences finies de l'équation de la conduction et les concepts de spécification de fonction et de pas de temps futur. Il s'applique au cas où au moins deux micro thermocouples sont installés.

L'algorithme général pour déterminer le flux surfacique peut se résumer de la façon suivante.

- soit $T_i^k$ la température à l'instant $t_k$, à l'abscisse $x_i$, et $q^k$ le flux à la paroi, $x = 0$.
- à l'instant $t_M$, on suppose connues :

  - les mesures $Y_j^{M+1}$, l=1 à r, j = 1 à j
    où r = nombre de pas de temps futur
    J = nombre de capteurs
  - $q^M$ le flux en $x = 0$
  - le champ de température $T_i^M$, i = O à N

- le flux $q^{M+1}$ à déterminer à l'instant $t_{M+1}$, s'obtient par la relation générale suivante :

$$q^{M+1} = q^M + \sum_{l=1}^{r} \sum_{j=1}^{J} K_j^l \left[ Y_j^{M+l} - V_j^{M+l} \right]$$

où $K_j^l$ = coefficient de gain calculé à partir des coefficients de sensibilité,
et $V_j^{M+1}$ = température calculée à l'emplacement de la mesure numéro j, en résolvant l'équation de la conduction sur l'intervalle de temps $(t_M, t_{M+r})$.

Le choix du nombre r de pas de temps futur est un paramètre essentiel de la méthode pour assurer la stabilité de l'algorithme. Des conditions suffisantes pour choisir r en fonction du pas de temps $\Delta t$ et de l'amplitude $\varepsilon$ du bruit sur les mesures Y sont données par H.J. REINHARDT [2]. Le calcul des coefficients $K^l_j$ est détaillé dans [1]. On décrit sans la suite le principe de ce calcul.

Calcul des coefficients $K^l_j$

soit $\theta$ la solution du problème direct :

$$\theta_t - \theta_{xx} = 0, \quad 0 < x < 1, \quad t > t_M$$

$$-\theta_x(x=0,t) = q, \quad\quad\quad t > t_M$$

$$\theta(x=1,t) = Y_{J+1}(t), \quad\quad t > t_M$$

$$\theta(x,t_M) = T^M(x), \quad 0 < x < 1$$

quelque soit la constante q, pour évaluer l'écart entre la température calculée $\theta(x_i, t_{M+1} ; q)$ à la mesure $Y^{M+1}_i$, on introduit le critère Z(q):

$$Z(q) = \sum_{i=1}^{J} \sum_{l=1}^{r} |\theta(x_i, t_{M+1}; q) - Y^{M+1}_i|^2$$

La valeur optimale de q qui minimise Z(q), notée q*, satisfait la relation :

$$z'(q^*) = 0$$

c'est-à-dire

$$\sum_{i=1}^{J} \sum_{l=1}^{r} (\theta(x_i, t_{M+1}; q^*) - Y^{M+1}_i) \frac{\partial \theta}{\partial q}(x_i, t_{M+1}; q^*) = 0$$

Pour obtenir la solution q*, la solution $\tilde{O}$ du problème direct est exprimée sous la forme d'une somme :

$$\theta = v + w$$

avec v et w qui vérifient :

$$v_t - v_{xx} = 0, \quad 0 < x < 1, \quad t > t_M$$

$$-v_x(x=0,t) = q - q^\# \qquad t > t_M$$

$$v(x=1,t) = 0 \qquad t > t_M$$

$$v(x,t_M) = 0 \quad , \quad 0 < x < 1$$

$$w_t - w_{xx} = 0, \quad 0 < x < 1, \quad t > t_M$$

$$-w_x(x=0,t) = q^\#, \qquad t > t_M$$

$$w(x=1,t) = Y_{J+1}(t), \qquad t > t_M$$

$$w(x,t_M) = T^M(x), \quad 0 < x < 1$$

où $q^\#$ est une constante quelconque, éventuellement nulle.

La dérivée $\partial\theta/\partial q$, notée S est solution des équations de sensibilité :

$$S_t - S_{xx} = 0, \quad 0 < x < 1, \quad t > t_M$$

$$-S_x(x=0,t) = 1, \qquad t > t_M$$

$$S(x=1,t) = 0 \qquad t > t_M$$

$$S(x,t_M) = 0 \quad , \quad 0 < x < 1$$

On en déduit que $v(x_i, t_{M+1}) = (q - q^\#) S(x_i, t_1)$
en posant $\Delta q = (q - q^\#)$ et $S^l_i = S(x_i, t_l)$,
on obtient

$$\theta(x_i, t_{M+l}; q) = \Delta q\, S^l_i + w(x_i, t_{M+1})$$

$$Z'(q) = \sum_{i=1}^{J} \sum_{l=1}^{r} (\Delta q\, S^1_i + w(x_i, t_{M+1}) - Y^{M+1}_i)\, S^1_i$$

d'où la solution $q^*$ vérifie :

$$\sum_{i=1}^{J} \sum_{l=1}^{r} (\Delta q^*\, S^1_i + w(x_i, t_{M+1}) - Y^{M+1}_i)\, S^1_i = 0$$

$$\Delta q^* \sum_{i=1}^{J} \sum_{l=1}^{r} (S^1_i)^2 = - \sum_{i=1}^{J} \sum_{l=1}^{r} (w(x_i, t_{M+1}) - Y^{M+1}_i)\, S^1_i$$

$$q^* = q^\# + \sum_{i=1}^{J} \sum_{l=1}^{r} ( Y_i^{M+1} - w(x_i, t_{M+1}) ) \, K_i^l$$

et les coefficients $k_i^l$ sont définis par

$$K_i^l = \frac{S_i^l}{\sum_{i=1}^{J} \sum_{l=1}^{r} ( S_i^l )^2}$$

Ces coefficients peuvent être déterminés hors ligne.

**Revendications**

1. Procédé de mesure en régime transitoire de flux et de températures à l'interface de deux milieux solide/solide ou solide/liquide ou solide/gaz au moyen d'au moins un thermocouple,
caractérisé en ce qu'on ménage dans la paroi solide traversée par le flux thermique une coupe débouchant à l'interface de ladite paroi avec l'autre milieu, ladite coupe étant parallèle audit flux au point de contact correspondant de l'interface on dispose au moins un microthermocouple dans un plan de ladite coupe au voisinage immédiat de ladite interface et, dans le cas d'une mesure de flux, au moins un autre microthermoouple dans ledit plan à une distance prédéterminée du microthermocouple d'interface et on recouvre étroitement ladite coupe par le matériau de ladite paroi solide ou un matériau ayant des caractéristiques thermiques similaires à celles du matériau pariétal.

2. Procédé selon la revendication 1,
caractérisé en ce que la coupe est réalisée en coupant la pièce en deux puis en réunissant à nouveau les deux parties par tout procédé convenable.

3. Procédé selon la revendication 1,
caractérisé en ce qu'on forme un puits à parois réglées dans lequel est ensuite ajusté étroitement un capteur de forme complémentaire, portant le ou les microthermocouples, et réalisé dans un matériau identique à celui de la paroi ou ayant des caractéristiques thermiques similaires.

4. Procédé selon la revendication 3,
caractérisé en ce qu'on divise le capteur réalisé en un matériau pariétal suivant au moins un plan parallèle au flux au point de contact correspondant de l'interface, en ce qu'on dépose sur au moins une partie de la face apparente dudit plan de coupe un isolant, en ce qu'on implante par des moyens appropriés le ou les microthermocouples dans ledit plan en suivant une direction normale audit flux en enlevant l'isolant au point de jonction du ou des microthermocouples avec ledit axe du plan de coupe, en ce qu'on assemble lesdits éléments du capteur, en ce qu'on ménage dans la paroi dans laquelle le capteur doit être implanté un évidement débouchant à l'interface où la ou les mesures doivent être réalisées, cet évidement étant de volume sensiblement identique à celui du corps du capteur et en ce qu'on immobilise le capteur à l'intérieur dudit évidement et que l'on assure une continuité parfaite entre la surface du capteur et celle du reste de la paroi.

5. Procédé de fabrication selon l'une des revendications 1 à 4,
caractérisé en ce qu'on implante le ou les microthermocouples dans ledit plan de coupe sous observation microscopique.

6. Procédé de fabrication selon l'une des revendications 1 à 4,
caractérisé en ce qu'on implante le ou les microthermocouples dans ledit plan de coupe par dépôt à travers un masque.

**7.** Procédé de fabrication selon l'une des revendications 1 à 4,
caractérisé en ce que l'on réalise le ou les microthermocouples par dépôt sous vide d'une couche mince et par photolithogravure de cette dernière.

**8.** Procédé selon l'une des revendication 1 à 4,
caractérisé en ce qu'on implante le ou les microthermocouples par transfert à partir d'un film adhésif de très faible épaisseur.

**9.** Procédé selon l'une des revendications 1 à 8,
caractérisé en ce qu'on relie le ou les microthermocouples à une unité de traitement des mesures réalisant un traitement séquentiel basé sur le principe de la méthode dite inverse de détermination des flux et températures surfaciques telle que la méthode de J.V. BECK qui utilise une approximation par différences finies de l'équation de la conduction et les concepts de spécification de fonction et de pas de temps futur.

**10.** Procédé selon la revendication 9,
caractérisé en ce que l'unité de traitement des données comprend au moins un convertisseur analogique numérique, un système à microprocesseur et un logiciel spécifique.

**11.** Dispositif de mesure en régime transitoire de flux et de température à l'interface de deux milieux solide/solide ou solide/liquide au moyen d'au moins un capteur (3) disposé dans l'une des parois solides, selon le procédé de la revendication 3,
caractérisé en ce que ledit capteur (3) dont le corps est en un matériau identique à celui de la paroi ou ayant des caractéristiques thermiques similaires à celles du matériau pariétal, est disposé, de manière ajustée, à l'intérieur d'un évidement débouchant sur l'interface (1) où les mesures sont à réaliser, les parois (2) dudit évidement étant parallèles au flux au point de contact correspondant de l'interface (1), ce capteur (3) présentant au moins un plan de coupe (7) parallèle au flux et incorporant dans ledit plan de coupe au moins un microthermocouple (8) isolé électriquement du matériau du corps du capteur (3), ce ou ces microthermocouples (8) présentant une portion (8a) disposée perpendiculaire audit flux et au moins une deuxième portion (8b) en prolongement de la première portion (8a) reliée à une unité de traitement des mesures.

**12.** Dispositif de mesure selon la revendication 11,
caractérisé en ce que le corps du capteur (3) présente une face avant (4) formée d'une portion de l'interface (1) de dimension suffisante pour être considérée comme isotherme, une paroi latérale (5) constituée par une surface réglée dont la génératrice normale aux surfaces isothermes décrit le contour de la face avant (4) et une face arrière (6) définie par une portion isotherme limitée par un contour qui est la trace de la paroi latérale (5) sur cette surface.

**13.** Dispositif de mesure selon la revendication 12,
caractérisé en ce que la face arrière (6) dudit capteur (3) est une portion de la face arrière (6) de la paroi (2).

**14.** Dispositif de mesure selon la revendication 13,
caractérisé en ce que le corps est une pièce de révolution présentant un axe de symétrie le long duquel sont implantés les thermocouples (8).

**15.** Dispositif selon l'une des revendications 11 à 14,
caractérisé en ce que le corps du capteur (3) est fixé à l'intérieur de l'évidement de manière à être immobilisé et que l'on assure une continuité parfaite entre la surface du capteur et celle du reste de la paroi.

**16.** Dispositif de mesure selon l'une des revendications 11 à 15,
caractérisé en ce que le capteur (3) est en au moins deux parties solidarisées au moyen de broches réalisées en un matériau identique à celui de la paroi (2).

**Patentansprüche**

**1.** Verfahren zur Messung von Flüssen und Temperaturen im Übergangszustand an der Grenzfläche zwischen zwei Medien fest/fest oder fest/flüssig oder fest/gasförmig mittels wenigstens eines Thermoelementes,
dadurch gekennzeichnet, daß in der festen Wandung, die von dem Wärmefluß durchquert wird, ein Schnitt gebildet wird, der in die Grenzfläche der Wandung mit dem anderen Medium mündet, wobei der Schnitt am entsprechenden Kontaktpunkt der Grenzfläche zu dem Fluß parallel ist, daß wenigstens ein Mikrothermoelement in einer Ebene des Schnittes in unmittelbarer Nähe der Grenzfläche angeordnet wird und daß im Falle einer Messung von Flüssen wenigstens ein weiteres Mikrothermoelement in der Ebene mit einem vorbestimmten Abstand zu dem Mikrothermoelement der Grenzfläche angeordnet wird und daß der Schnitt durch das Material der festen Wandung oder ein Material, das zu den thermischen Eigenschaften des Wandungsmateriales ähnliche thermische Eigenschaften aufweist, eng abgedeckt wird.

2. Verfahren nach Anspruch 1,
dadurch gekennzeichnet, daß der Schnitt dadurch erzeugt wird, daß das Teil in zwei Teile geschnitten wird und die zwei Teile dann von neuem durch ein beliebiges geeignetes Verfahren zusammengefügt werden.

3. Verfahren nach Anspruch 1,
dadurch gekennzeichnet, daß eine Ausnehmung mit gleichmäßigen Wandungen gebildet wird, in die dann ein Aufnehmer von komplementärer Form eng eingepaßt wird, der das Mikrothermoelement oder die Mikrothermoelemente trägt und aus einem Material besteht, das zu demjenigen der Wandung identisch ist oder ähnliche thermische Eigenschaften aufweist.

4. Verfahren nach Anspruch 3,
dadurch gekennzeichnet, daß der aus einem Wandungsmaterial bestehende Aufnehmer entlang wenigstens einer Ebene, die zu dem Fluß am entsprechenden Kontaktpunkt der Grenzfläche parallel ist, geteilt wird, daß auf wenistens einen Teil der Stirnfläche der Schnittebene ein Isoliermaterial aufgebracht wird, daß durch geeignete Mittel das Mikrothermoelement oder die Mikrothermoelemente in die Ebene eingebracht wird bzw. werden entlang einer Richtung, die zu derjenigen des Flusses senkrecht ist, indem das Isoliermaterial am Verbindungspunkt des Mikrotrothermoelementes oder der Mikrothermoelemente mit der Achse der Schnittebene entfernt wird, daß die Elemente des Aufnehmers angebracht werden, daß in der Wandung, in die der Aufnehmer eingebracht werden soll, eine Aussparung gebildet wird, die in die Grenzfläche mündet, wo die Messung oder die Messungen durchgeführt werden soll bzw. sollen, wobei diese Aussparung von einem zu dem Volumen des Körpers des Aufnehmers im wesentlichen identischen Volumen ist, und daß der Aufnehmer im Inneren der Ausnehmung festgesetzt wird und daß eine perfekte Kontinuität zwischen der Oberfläche des Aufnehmers und derjenigen des Restes der Wandung sichergestellt wird.

5. Verfahren zur Herstellung nach einem der Ansprüche 1 bis 4,
dadurch gekennzeichnet, daß das Mikrothermoelement oder die Mikrothermoelemente unter mikroskopischer Beobachtung in die Schnittebene eingebracht wird bzw. werden.

6. Verfahren zur Herstellung nach einem der Ansprüche 1 bis 4,
dadurch gekennzeichnet, daß das Mikrothermoelement oder die Mikrothermoelemente durch Einsetzen durch eine Maske hindurch in die Schnittebene eingebracht wird bzw. werden.

7. Verfahren zur Herstellung nach einem der Ansprüche 1 bis 4,
dadurch gekennzeichnet, daß das Mikrothermoelement oder die Mikrothermoelemente durch Aufbringen einer dünnen Schicht unter Unterdruck und durch Fotolithogravur der letzteren gebildet wird bzw. werden.

8. Verfahren nach einem der Ansprüche 1 bis 4,
dadurch gekennzeichnet, daß das Mikrothermoelement oder die Mikrothermoelemente durch Transfer ausgehend von einem adhäsiven Film sehr geringer Dicke eingebracht wird bzw. werden.

9. Verfahren nach einem der Ansprüche 1 bis 8,
dadurch gekennzeichnet, daß das Mikrothermoelement oder die Mikrothermoelemente mit einer Einheit zur Verarbeitung der Messungen verbunden wird bzw. werden, die eine sequentielle Verarbeitung realisiert, die auf dem Prinzip der sogenannten inversen Methode zur Bestimmung der Flüsse und Temperaturen an Oberflächen basiert ist, beispielsweise der Methode von J.V. BECK, die eine Approximation der Leitungsgleichung durch abgeschlossene Differenzen und die Konzepte der Spezifikation der Funktion und nicht der zukünftigen Zeit verwendet.

10. Verfahren nach Anspruch 9,
dadurch gekennzeichnet, daß die Einheit zur Verarbeitung der Werte wenigstens einen Analog/Digitalwandler, ein System mit einem Mikroprozessor und eine spezifische Software aufweist.

**11.** Vorrichtung zur Messung von Fluß und Temperatur im Übergangszustand an der Grenzfläche zwischen zwei Medien fest/fest oder fest/flüssig mittels wenigstens eines Aufnehmers (3), der in einer der festen Wandungen angeordnet ist, gemäß dem Verfahren nach Anspruch 3,
dadurch gekennzeichnet, daß der Aufnehmer (3), dessen Körper aus einem Material besteht, das zu demjenigen der Wandung identisch ist oder zu den thermischen Eigenschaften des Wandungsmaterials ähnliche thermische Eigenschaften aufweist, in ausgerichteter Weise im Inneren einer Aussparung angeordnet ist, die in die Grenzfläche (1) mündet, wo die Messungen auszuführen sind, wobei die Wandungen (2) der Aussparung parallel zum Fluß im entsprechenden Kontaktpunkt der Grenzfläche (1) sind, wobei der Aufnehmer (3) wenigstens eine Schnittebene (7) aufweist, die zum Fluß parallel ist und in der Schnittebene wenigstens ein Mikrothermoelement (8) inkorporiert, das elektrisch von dem Material des Körpers des Aufnehmers (3) isoliert ist, wobei das Mikrothermoelement oder die Mikrothermoelemente (8) einen Teil (8a), der im wesentlichen senkrecht zu dem Fluß angeordnet ist, und wenigstens einen zweiten Teil (8b) aufweisen, der in Verlängerung des ersten Teiles (8a) angeordnet ist und mit einer Einheit zur Verarbeitung der Messungen verbunden ist.

**12.** Meßvorrichtung nach Anspruch 11,
dadurch gekennzeichnet, daß der Körper des Aufnehmers (3) aufweist eine vordere Fläche (4), die durch einen Teil der Grenzfläche (1) von ausreichender Größe gebildet ist, um als Isotherme betrachtet zu werden, eine seitliche Wandung (5), die durch eine gleichmäßige Fläche gebildet ist, deren Erzeugende, die senkrecht zu den isothermen Flächen ist, die Kontur der vorderen Fläche (4) beschreibt, und eine hintere Fläche (6), die durch einen isothermen Teil definiert ist, der durch eine Kontur begrenzt ist, die die Spur der seitlichen Wandung (5) auf dieser Fläche ist.

**13.** Meßvorrichtung nach Anspruch 12,
dadurch gekennzeichnet, daß die hintere Fläche (6) des Aufnehmers (3) ein Teil der hinteren Fläche (6) der Wandung (2) ist.

**14.** Meßvorrichtung nach Anspruch 13,
dadurch gekennzeichnet, daß der Körper ein Drehteil ist, das eine Symmetrieachse aufweist, entlang derer die Thermoelemente (8) eingebracht sind.

**15.** Vorrichtung nach einem der Ansprüche 11 bis 14,
dadurch gekennzeichnet, daß der Körper des Aufnehmers (3) im Inneren der Aussparung derart befestigt ist, daß er festgesetzt ist, und daß eine perfekte Kontinuität zwischen der Oberfläche des Aufnehmers und derjenigen des Restes der Wandung sichergestellt ist.

**16.** Meßvorrichung nach einem der Ansprüche 11 bis 15,
dadurch gekennzeichnet, daß der Aufnehmer (3) aus wenigstens zwei Teilen besteht, die mittels Stiften zusammengefügt sind, die aus einem Material bestehen, das zu demjenigen der Wandung (2) identisch ist.

**Claims**

**1.** Process for measurement in transitory regime of flux and temperautres at the interface of two solid/solid or solid/liquid or solid/gas media by means of at least one thermocouple,
characterized in that there is provided in the solid wall traversed by the heat flux a cut opening onto the interface of said wall with the other medium, said cut being parallel to said flux at the corresponding point of contact of the interface, there is provided at least one microthermocouple in a plane of said cut immediately adjacent said interface and, in the case of a flux measurement, at least one other microthermocouple in said plane at a predetermined distance from the interfacial microthermocouple and said cut is tightly covered by the material of said solid wall or a material having thermal characteristics similar to those of the wall material.

**2.** Process according to claim 1,
characterized in that the cut is made by cutting the piece in two then reuniting the two parts by any suitable procedure.

**3.** Process according to claim 1,
characterized in that a well is formed with lined out walls in which is then tightly positioned a detector of complementary shape, bearing the microthermocouple or microthermocouples, and made of a material identical to that of the wall or having similar thermal characteristics.

4. Process according to claim 3,

characterized in that the detector made of a wall material is divided along at least one plane parallel to the flux at the corresponding point of contact of the interface, in that there is positioned an insulation on at least one portion of the exposed face of said cutting plane, in that there is implanted by suitable means the microthermocouple or microthermocouples in said plane following a direction normal to said flux by removing the insulation at the junction point of the microthermocouple or microthermocouples with said axis of the cutting plane, in that said elements of the detector are assembled, in that there is provided in the wall in which the detector must be implanted a recess opening onto the interface where the measurement or measurements are to be taken, this recess being of a volume substantially identical to that of the body of the detector and in that the detector is immobilized within the interior of said recess and that a perfect continuity is ensured between the surface of the detector and that of the rest of the wall.

5. Process for production according to one of claims 1 to 4,
characterized in that the microthermocouple or microthermocouples are implanted in said cutting plane under microscopic observation.

6. Process for production according to one of claims 1 to 4,
characterized in that the microthermocouple or microthermocouples are implanted in said cutting plane by deposition through a mask.

7. Process for production according to one of claims 1 to 4,
characterized in that the microthermocouple or microthermocouples are made by vaccum deposition of a thin layer and by photolithography of this latter.

8. Process according to one of claims 1 to 4,
characterized in that the microthermocouple or microthermocouples are implanted by transfer from an adhesive film of very small thickness.

9. Process according to one of claims 1 to 8,
characterized in that the microthermocouple or microthermocouples are connected to a unit for processing the measurements carrying out a sequential treatment based on the principle of the so-called inverse determination method of surface flux and temperatures such as the method of J.V. BECK which uses an approximation by finite differences of the equation of conduction and the concepts of specification of operation and of future time steps.

10. Process according to claim 9,
characterized in that the data processing unit comprises at least one analogic to digital converter, a system with a microprocessor and a specific software.

11. Device for measuring in transitory regime the flux and temperature at the interface of two solid/solid or solid/liquid media by means of at least one detector (3) disposed in one of the solid walls, according to the process of claim 3, characterized in that said detector (3) whose body is of a material identical to that of the wall or having thermal characteristics similar to those of the wall material, is disposed, in a fitted manner, within the interior of a recess opening on the interface (1) where the measurements are to be taken, the walls (2) of said recess being parallel to the flux at the point of contact corresponding of the interface (1), this detector (3) having at least one cutting plane (7) parallel to the flux and incorporating in said cutting plane at least one microthermocouple (8) electrically insulated from the material of the body of the detector (3), this microthermocouple or these microthermocouples (8) having a portion (8a) disposed perpendicular to said flux and at least one second portion (8b) in prolongation of the first portion (8a) connected to a measurement processing unit.

12. Measuring device according to claim 11,
characterized in that the body of the detector (3) has a front face (4) formed by a portion of the interface (1) of a size sufficient to be considered as isothermal, a side wall (5) constituted by a lined out surface whose generatrix normal to the isothermal surfaces describes the contour of the front face (4) and a rear face (6) defined by an isothermal portion limited by a contour which is the trace of the side wall (5) on this surface.

13. Measuring device according to claim 12,
characterized in that the rear face (6) of said detector (3) is a portion of the rear face (6) of the wall (2).

**14.** Measuring device according to claim 13,
characterized in that the body is a body of revolution having an axis of symmetry along which are implanted the thermocouples (8).

**15.** Device according to one of claims 11 to 14,
characterized in that the body of the detector (3) is fixed to the interior of the recess so as to be immobilized and that a perfect continuity is ensured between the surface of the detector and that of the rest of the wall.

**16.** Measuring device according to one of claims 11 to 15,
characterized in that the detector (3) is of at least two parts secured together by means of pins made of a material identical to that of the wall (2).

# FIG.1

# FIG. 2A  FIG. 2B  FIG. 2C

# FIG.3

**FIG.4**

# FIG.5